# EUROPEAN PATENT APPLICATION

(11) **EP 0 863 076 A2**
(43) Date of publication of application: **09.09.1998**
(21) Application number: 98301522.3
(22) Date of filing: 02.03.1998
(51) Int. Cl.: B65B 7/16

(54) **Sealing element, method and apparatus for sealing an orifice against the passage of liquid**

(30) Priority: 05.03.1997 DE 19708974
(71) Applicant: EMHART INC., Newark, Delaware 19711 (US)
(72) Inventor: Schaty, Harald, 35582 Wetzlar-Dutenhofen (DE); Steinbach, Karin, 35578 Wetzlar (DE)
(74) Representative: Stagg, Diana Christine

(57) **Abstract**

The invention relates to the sealing of an orifice (1) between an external side (10) and an internal side (11) of a structure (2), in particular to prevent the passage of a liquid through the orifice (1), wherein a dimensionally stable, plastically deformable sealing means (3; 4) is positioned on the external side (10) of the orifice (1), covering the orifice (1), wherein a central part (5) of the sealing means (3; 4) is turned to the internal side (11) of the orifice (1), preferably by a plunger (14), whereas a peripheral part (8) of the sealing means (3; 4) encircling the rim of the orifice (1) all-round on the external side (10) is secured and wherein the cross section of the protrusion (12) is enlarged by gas introduced into the protrusion (12) so the sealing means (3; 4) rests tightly against the wall (13) and/or the internal side (11) of the orifice (1). The sealing means (3; 4) can be removed at a later stage.

The seal according to the invention can be produced with inexpensive apparatus and helps to avoid costs and expenditure for eliminating liquid which passes through in an undesirable manner during a mass production process.

## Description

The present invention relates to a method of sealing an orifice in a structure, in particular a structure surrounding a cavity, to prevent the escape of a liquid located in the cavity. The invention also relates to an apparatus for applying a corresponding seal, and to a corresponding sealing element.

In mass production processes, liquids are frequently used, for example to protect solid components from subsequent corrosion. The liquids can, for example, flow out, solidify or evaporate after application to the surfaces of the solid components. As it flows out, the liquid can undesirably reach other components and/or parts of the manufacturing plant. A specific problem of this type arises during the mass production of cars. A corrosion-preventing liquid is introduced into the cavities (cavity blocking) to make the wall materials of the cavities resistant to corrosion. The liquid is frequently introduced into the cavity through an orifice at the bottom or side, or there is additionally an orifice at the bottom or side so the liquid can escape through the orifice. One method of avoiding undesirable escape of the liquid is to use solidifying and/or evaporating liquids. Owing to high clock frequencies during mass production, the solidification process and/or the evaporation process would usually have to be completed at least substantially within very short periods, for example within a few seconds, to avoid the escape. Suitable liquids are therefore difficult to handle as care has to be taken to prevent them from solidifying and/or evaporating even during storage. Furthermore, such liquids can be expensive.

An object of the present invention is to provide a method of sealing an orifice, in particular an orifice in a structure surrounding a cavity, against the escape of a liquid located in the cavity, wherein the orifice can be sealed in as short a time as possible while incurring minimum costs. A further object of the invention is to provide a suitable apparatus for applying a seal. Yet a further object of the invention is to provide a suitable sealing element.

The present invention provides a method of sealing an orifice between an external side and an internal side of a structure, in particular to prevent the passage of a liquid through the orifice, wherein a dimensionally stable, plastically deformable sealing means is positioned on the external side of the orifice, covering the orifice, wherein a central part of the sealing means is turned to the internal side of the orifice, whereas a peripheral part of the sealing means encircling the rim of the orifice all-round on the external side is secured and wherein the cross section of the protrusion is enlarged by gas introduced into the protrusion so the sealing means rests tightly against the wall and/or the internal side of the orifice.

The present invention further provides an apparatus for applying a seal in and/or on an orifice between an external side and an internal side of a structure, in particular to prevent the passage of a liquid through the orifice, with a holder capable of travelling linearly in a working direction, for pressing a solid, plastically deformable sealing means against the external side of the orifice, with a plunger which is guided in the holder and can be driven out of the holder in the same working direction, for turning a central part of the sealing means to the internal side of the orifice, and with a gas supply line which has at least one outlet orifice in the region of the leading end of the plunger and/or in the region of the end of the guide in the holder in order to cause the protruding sealing means to rest tightly against the wall and/or the internal side of the orifice by introduction of gas into the protrusion.

The present invention further provides a single-part solid sealing means for sealing an orifice between an external side and an internal side of a structure, in particular to prevent the passage of a liquid through the orifice wherein the sealing means has a plastically deformable central part which can be turned from the internal to the external side of the orifice and can be caused to rest tightly against the wall and/or the internal side of the orifice, and has a peripheral part for encircling the rim of the orifice on the external side.

Plastically deformable sealing elements, in particular synthetic materials, can be produced nowadays at low cost.

The term dimensionally stable sealing elements denotes sealing elements which are found in a solid state before and after the application of a seal.

In a preferred embodiment of the method according to the invention, a central region of the sealing element is turned to the internal side of the orifice by means of a plunger which is preferably heated. In a further development, the gas is introduced into the protrusion through a gas conduit which extends substantially in the protrusion direction in the interior or along the plunger and ends openly in the end region of the plunger. The gas conduit can extend, for example, through a bore in the interior of the plunger or in a groove in the wall of the plunger.

During introduction of the gas, the speed and quantity of gas have to be selected in relation to the plunger diameter and to the space available so as to allow optimum expansion of the protrusion.

The gas is preferably introduced into the protrusion radially laterally in the end region of the plunger. The gas stream flowing from the gas conduit is preferably distributed substantially uniformly over the circumference of the plunger. As a result, the cross section of the protrusion increases radially uniformly, as viewed from the plunger, and rests tightly against the wall and/or the internal side of the orifice uniformly overall.

In a further preferred embodiment of the method, the gas flows laterally into the protrusion on the internal side of the orifice so the protrusion is enlarged in the manner of a mushroom head to a cross section which is greater than the minimum cross section of the orifice. The bulge thus formed allows the sealing element to rest in the manner of a valve piston on a valve seat formed by the rim and/or the wall of the orifice. The sealing effect is optionally further reinforced by liquid pressing against the sealing element.

It is desirable if hot gas is introduced into the protrusion, the temperature of which is considerably higher, preferably at least 50°K higher, than the temperature of the sealing element before the beginning of the protrusion process. In an advantageous embodiment, the hot gas consists at least partially of steam. Steam ensures good transfer of heat between the gas and the sealing element so the sealing element is heated rapidly, deforms plastically and rests against the wall and/or the internal side of the orifice. Particularly high clock frequencies can therefore be achieved when adopting the method in mass production. In a further desirable embodiment of the method, during the protrusion process, the plunger has a considerably higher temperature, preferably a temperature which is at least 30°K higher, than the sealing means before the beginning of the protrusion process. This embodiment has similar advantages to the use of steam owing to the direct contact between the plunger and the sealing element during the protrusion process.

Higher clock frequencies or lower clock frequencies can be adjusted during mass production by means of the pressure of the gas which is to be introduced.

The pressure should be adapted to the mechanical and optionally thermal properties of the sealing element. In one embodiment of the method, the gas to be introduced is at a pressure of 1500 hPa to 5000 hPa, preferably at a pressure of 2000 hPa to 3000 hPa.

The method is particularly suitable for orifices which are preferably cylindrical bores, for example with an internal thread. In a particular embodiment of the method, the viscosity of a liquid located in a cavity of the structure increases with the passage of time. When a predetermined viscosity value is reached, i.e. when the liquid has becomes sufficiently thick, or once a predetermined period of time has elapsed after the sealing of the orifice, the sealing element is pierced and/or removed from the orifice. A screw or another component with an external thread, for example, can then be screwed into the bore with an internal thread. It is sometimes desirable for residues of the sealing element to remain in the turns of the internal thread to provide a seal against the passage of liquid or slackening even when the orifice is screwed up.

The method is also particularly suitable for orifices with shapes other than cylindrical shapes. For example, orifices which are originally cylindrical can be deformed significantly, for example during welding work in car production. A significant advantage of the method is that the sealing element adapts itself to the shape of the orifice during application of the seal.

An embodiment of the method in which a plurality of the orifices is to be sealed and the sealing element is connected to further sealing elements in the manner of a belt or chain for sealing the orifices is preferred. An embodiment in which the sealing element is severed after the positioning of a strip of plastic film on the external side of the orifice is particularly preferred. Severing can be carried out, for example, by cutting or punching.

By applying the method according to the invention, it is possible to seal orifices of different sizes with the same sealing elements. For example, unround orifices and bores having internal threads M3 to M5 and M6 to M10 can each be sealed with sealing elements of the same size.

The apparatus according to the invention for applying a seal has a holder capable of travelling linearly in a working direction, for pressing a solid, plastically deformable sealing element against the external side of the orifice. A plunger which can be driven out of the holder in the same working direction is guided in the holder for turning a central part of the sealing element to the internal side of the orifice. The apparatus also comprises a gas supply line which has at least one outlet orifice in the region of the leading end of the plunger and/or in the region of the end of the guide in the holder in order to cause the protruding sealing element to rest tightly against the wall and/or the internal side of the orifice by introduction of gas into the protrusion.

In a development of the apparatus, the plunger has substantially cylindrical external dimensions and is guided in a cylindrical bore in the holder. The plunger preferably has a substantially axially extending bore in its interior which is connected to at least one gas outlet orifice located in the region of the plunger end. This can preferably widen in the form of a trumpet to the outlet. In yet a further development, the plunger has a plurality of, and preferably at least three, gas outlet orifices which end laterally at the external circumference of the plunger and preferably have orifice cross sections distributed uniformly round the external circumference. In a particular embodiment of the apparatus, the gas outlet orifices are separated from one another merely by webs which mechanically stabilise the plunger.

In a further development of the apparatus according to the invention, the holder has an end face with profiling for securing the sealing element between the end face and the structure surrounding the cavity. It is preferable if the end face has a plurality of thorn-like elevations to be pressed into the sealing element. As already described above in the description of the method according to the invention, it is desirable if the plunger can be heated. The plunger can be heated directly by a heater connected to it or indirectly. In a preferred embodiment, the bore extending in the interior of the plunger is connected to a gas reservoir so the plunger can be heated by hot gas located in the reservoir and the bore.

In an advantageous embodiment of the apparatus, the apparatus has a cutting plate with a cutting edge for cutting off and/or cutting out a sealing element blank from a sealing element supply. The sealing element supply can be applied to a cutting plate face extending transversely to the working direction of the holder. The holder is capable of travelling transversely to the course of the cutting edge so the blank can be cut off or cut out. In a particular embodiment, the cutting plate has a circular cut-out on the rim of which the cutting edge rests. The holder which is cylindrical in this embodiment is capable of travelling through the circular cut-out, minimum play existing between the holder and the rim of the cut-out.

The sealing element according to the invention has a plastically deformable central part and a peripheral part. The central part can be turned from the internal to the external side of the orifice and can be caused to rest tightly against the wall and/or the internal side of the orifice. The rim of the orifice to be sealed can be encircled by the peripheral part. The central part of the sealing element is preferably substantially dimensionally stable at room temperature and plastically deformable only at a temperature above 50°C, preferably above 80°C. In this way, a reliable sealing connection between the sealing element and the wall or the internal side of the orifice can be achieved after application of the sealing element at high temperature and after subsequent cooling. It is desirable if the sealing element adheres to the wall material of the orifice at room temperature owing to adhesive forces between the two materials.

A sealing element which can be widened particularly far in its cross section after being turned to the internal side of the orifice is particularly preferred. This allows sealing elements of the same size to be used for orifices having cross sections of different sizes.

In an embodiment of the sealing element, the sealing element, in the undeformed state, has a substantially greater thickness at least in the rim region of the central part than in the peripheral part. In yet a further embodiment of the sealing element, the sealing element, in the undeformed state, has multiple folds or corrugations in the rim region of the central part, wherein the fold edges or corrugation peaks and corrugation troughs enclose the internal region of the central part. Both embodiments allow the sealing element to be turned further in the direction of the internal side of an orifice than with a constant material thickness and in the absence of a fold and corrugation. In a further embodiment of the sealing element, in the undeformed state, the peripheral part lies substantially in a plane and the central part is bent from the plane. Orifices can be sealed more rapidly with pre-shaped sealing elements of this type as the sealing element has to be deformed less markedly.

In a particularly inexpensive embodiment of the sealing element, the sealing element is a plastic film of substantially constant thickness in the undeformed state.

Embodiments of the method, the apparatus and the sealing element will be described with reference to the drawings. The drawings merely show examples, but the invention is not restricted to them.
Figure 1 shows an arrangement with an embodiment of the apparatus according to the invention before application of a seal;
Figure 2 is a plan view of a sealing element according to the invention; and
Figure 3 shows three different states of the arrangement in Figure 1 during the application of a sealing element.

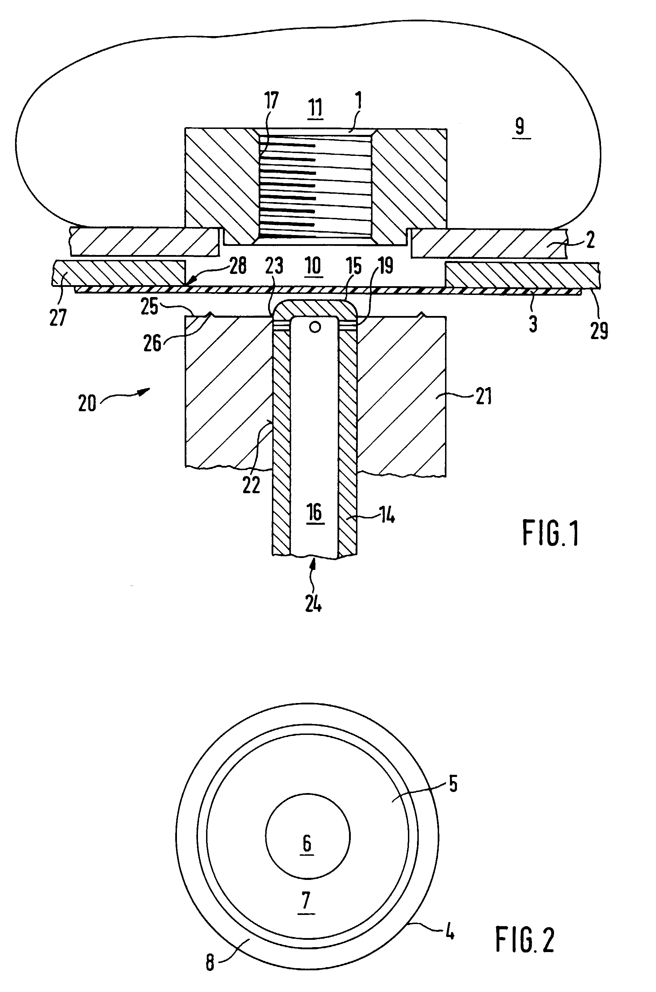

Figure 1 shows an arrangement with an orifice 1 in a structure 2 surrounding a cavity 9. The structure 2 has a metal plate and a threaded nut with an internal thread 17. A plastic film 3 and an apparatus 20 according to the invention with which the plastic film 3 can be turned in the direction of the internal side 11 of the orifice 1 are arranged on the external side 10 of the orifice 1. The apparatus 20 has a holder 21, a plunger 14 guided in the holder 21, a gas conduit 16 guided axially in the interior of the plunger 14 and a cutting plate 27. The end face 25 of the holder 21 is profiled by a plurality of thorns 26 for securing the plastic film 3. The substantially cylindrical plunger 14 can be driven out of the guide 22 which is circular in cross section toward the internal side 11 of the orifice 1. The gas supply line 16; 19 for introducing gas into a subsequent protrusion of the plastic film 3 is produced in the interior of the plunger 14 by a concentric axial bore 16 and lateral outlet orifices 19 connected thereto in the region of the plunger end 15. In an alternative embodiment of the apparatus according to the invention, the gas supply line is located not in the interior of the plunger but in the interior of the holder with at least one gas outlet orifice in the region of the guide end 23. The plastic film 3 is applied to the cutting plate face 29 of the cutting plate 27. The cutting edge 28 surrounds a circular cut-out in the cutting plate 27.

Figure 2 shows a further embodiment 4 of the sealing element according to the invention. In its central part 5, the sealing element 4 which is circular in the cross section shown has an internal region 6 and a concentric rim region 7. In the transition region between the rim region 7 of the central part 5 and the peripheral part 8, a thick circular line indicates the region in which the material of the seal 4 is corrugated, more specifically with linearly extending corrugation peaks and troughs. The material thickness of the sealing element is substantially equal in the internal region 6 of the central part 5, in the corrugated region and in the peripheral part 8. The material thickness in the rim region 7 of the central part, on the other hand, is greater to simplify application of the seal 4 in or on an orifice.

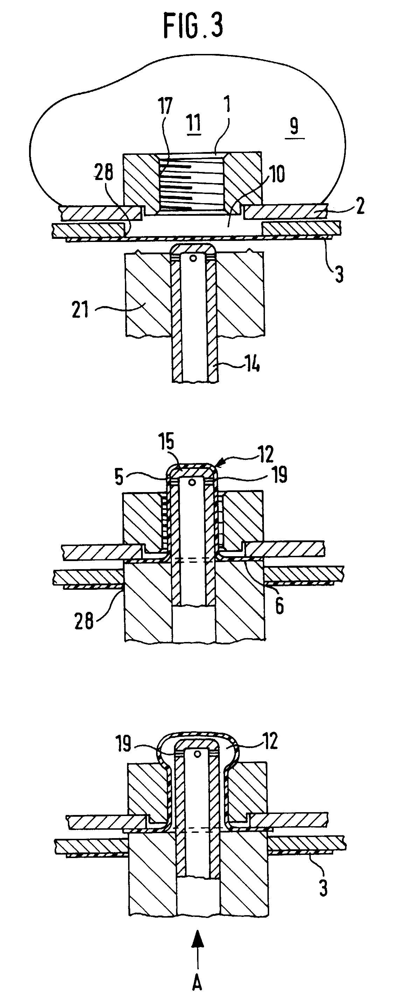

Steps of an embodiment of the method according to the invention are described with reference to Figure 3. The upper partial illustration shows the same arrangement as Figure 1. The plastic film 3 is already positioned on the external side of the orifice 1, covering the orifice 1. By subsequent linear movement of the holder 21 in the direction A shown by an arrow at the lower edge of Figure 3, the plastic film 3 is cut out at the cutting edge 28 and pressed onto the structure 2. The plunger 14 is driven out of the holder 21 in direction A so the central part 5 of the plastic film 3 is turned to the internal side 11 of the orifice 1. The state shown in the central part of the Figure is therefore achieved. Gas is then introduced into the protrusion 12 through the outlet orifices 19 so the end of the protrusion 12 widens in the manner of a mushroom head under the gas pressure and the plastic film 3 comes to rest on the wall 13 of the orifice 1 and on the rim of the orifice 1 at the internal side 11 (lower part of Figure). The plastic film 3 is pressed into the turns of the internal thread 17 providing firm cohesion between the plastic film 3 and the orifice 12. The sealing effect is also reinforced by the mushroom-like enlargement on the internal side 11 of the orifice 1. Liquid located in the cavity 9 optionally presses the mushroom head-like bulge together so it is flattened and pressed against the rim of the orifice 1 on the internal side 11.

The embodiments of the method, the apparatus and the sealing element described with reference to the drawings illustrate the advantages of the invention. A cavity orifice can be reliably sealed against the passage of liquid with low material costs. Cycle times of a few seconds and even less than one second are possible with suitable control of the method. The method can therefore easily be integrated into an existing mass production process. The sealing elements can be removed at a later stage or can also be thrust into the cavity where they adhere to a slow-drying cavity blocking means so noise cannot be created at a later stage by loose parts. Overall, the seal according to the invention can be produced with inexpensive apparatus and helps to avoid costs and expenditure for eliminating cavity blocking means which issue undesirably during the production process.

## Claims

1. Method of sealing an orifice (1) between an external side (10) and an internal side (11) of a structure (2), in particular to prevent the passage of a liquid through the orifice (1), wherein a dimensionally stable, plastically deformable sealing means (3; 4) is positioned on the external side (10) of the orifice (1), covering the orifice (1), wherein a central part (5) of the sealing means (3; 4) is turned to the internal side (11) of the orifice (1), whereas a peripheral part (8) of the sealing means (3; 4) encircling the rim of the orifice (1) all-round on the external side (10) is secured and wherein the cross section of the protrusion (12) is enlarged by gas introduced into the protrusion (12) so the sealing means (3; 4) rests tightly against the wall (13) and/or the internal side (11) of the orifice (1).

2. Method according to claim 1, wherein the central part (5) of the sealing means (3; 4) is turned to the internal side (11) of the orifice (1) by means of a plunger (14).

3. Method according to claim 2, wherein the gas is introduced into the protrusion (12) through a gas conduit (16) which extends substantially in the protrusion direction in the interior or along the plunger (14), ends open in the end region of the plunger (15) and widens, in particular, in the form of a trumpet.

4. Method according to claim 3, wherein the gas is introduced radially laterally in the region of the plunger end (15) and wherein the gas stream flowing from the gas conduit (16) is distributed substantially uniformly over the circumference of the plunger (14).

5. Method according to claim 4, wherein the gas flows into the protrusion (12) on the internal side (11) of the orifice (1) and wherein the protrusion (12) is enlarged in the manner of a mushroom head by the laterally issuing gas to a cross section which is greater than the minimum cross section of the orifice (1).

6. Method according to one of claims 2 to 5, wherein, during the protrusion process, the plunger (14) has a considerably higher temperature, preferably a temperature which is at least 30 K higher, than the sealing means (3; 4) before the beginning of the protrusion process.

7. Method according to one of claims 1 to 6, wherein hot gas is introduced into the protrusion (12), the temperature of which is considerably higher, preferably at least 50 K higher, than the temperature of the sealing means (3; 4) before the beginning of the protrusion process.

8. Method according to claim 7, wherein the hot gas consists at least partially of steam.

9. Method according to one of claims 1 to 8, wherein the gas to be introduced is at a pressure of 1500 hPa to 5000 hPa, preferably at a pressure of 2000 hPa to 3000 hPa.

10. Method according to one of claims 1 to 9, wherein the orifice (1) is a preferably cylindrical orifice with an internal thread (17).

11. Method according to claim 10, wherein the internal side (11) of the structure (2) forms a cavity (9) in which a liquid is contained, in particular a cavity-blocking liquid, wherein the viscosity of the liquid located in the cavity (9) increases with the passage of time, wherein the sealing means (3; 4) is pierced and/or is removed from the orifice (1) after a predetermined viscosity value has been reached or once a predetermined period of time has elapsed after the sealing of the orifice (1).

12. Method according to one of claims 1 to 11, wherein a plurality of sealing means (3; 4) is connected to one another in the manner of a belt or chain for sealing a plurality of the orifices (1) and is supplied to the plunger in this form.

13. Method according to claim 12, wherein the sealing means (3; 4) is severed after the positioning of a strip of plastic film on the external side (10) of the orifice (1).

14. Apparatus (20) for applying a seal (18) in and/or on an orifice (1) between an external side (10) and an internal side (11) of a structure (2), in particular to prevent the passage of a liquid through the orifice (1), with a holder (21) capable of travelling linearly in a working direction (A), for pressing a solid, plastically deformable sealing means (3; 4) against the external side (10) of the orifice (1), with a plunger (14) which is guided in the holder (21) and can be driven out of the holder (21) in the same working direction (A), for turning a central part (5) of the sealing means (3; 4) to the internal side (11) of the orifice (1), and with a gas supply line (16) which has at least one outlet orifice (19) in the region of the leading end (15) of the plunger (14) and/or in the region of the end (23) of the guide (22) in the holder (21) in order to cause the protruding sealing means (3; 4) to rest tightly against the wall (13) and/or the internal side (11) of the orifice (1) by introduction of gas into the protrusion (12).

15. Apparatus according to claim 14, wherein the plunger (14) has substantially cylindrical external dimensions and is guided in a cylindrical bore in the holder (21).

16. Apparatus according to claim 14 or 15, wherein the plunger (14) has, in its interior, a substantially axially extending bore (24) which is connected to at least one gas outlet orifice (19) located in the region of the plunger end (15).

17. Apparatus according to claim 16, wherein the plunger (14) has a plurality of, and preferably at least three, gas outlet orifices (19) which end laterally at the external circumference of the plunger (14) and preferably have orifice cross sections distributed uniformly round the external circumference.

18. Apparatus according to one of claims 14 to 17, wherein the holder (21) has an end face (25) with profiling (26) for securing the sealing means (3; 4) between the end face (25) and the structure (2).

19. Apparatus according to claim 18, wherein the end face (25) has a plurality of thorn-like elevations (26) to be pressed into the sealing means (3; 4).

20. Apparatus according to one of claims 14 to 19, wherein the plunger (14) can be heated.

21. Apparatus according to one of claims 14 to 20, with a cutting plate (27) which has a cutting edge (28) for cutting off and/or cutting out the sealing means from a sealing means supply, wherein one cutting plate face (29) against which the sealing means supply can be placed extends transversely to the working direction (A) and wherein the holder is capable of travelling along the cutting edge (28) so the sealing means (3) can be cut off or cut out.

22. Apparatus according to claim 21, wherein the cutting plate (27) has a circular cut-out on the rim of which the cutting edge (28) rests.

23. Single-part solid sealing means (3; 4) for sealing an orifice (1) between an external side (10) and an internal side (11) of a structure (2), in particular to prevent the passage of a liquid through the orifice (1) wherein the sealing means (3; 4) has a plastically deformable central part (5) which can be turned from the internal to the external side (10) of the orifice (1) and can be caused to rest tightly against the wall (13) and/or the internal side (11) of the orifice (1), and has a peripheral part (8) for encircling the rim of the orifice (1) on the external side (10).

24. Sealing means according to claim 23, of which the central part (5) is substantially dimensionally stable at room temperature and is plastically deformable only at a temperature above 50°C, preferably above 80°C.

25. Sealing means according to claim 23 or 24 which, in the undeformed state, has a substantially greater thickness in the rim region (7) of the central part (5) than in the peripheral part (8).

26. Sealing means according to claim 23, 24 or 25, which, in the undeformed state, has multiple folds or corrugations in the rim region (7) of the central part (5), wherein the fold edges or corrugation peaks enclose the internal region (6) of the central part (5).

27. Sealing means according to one of claims 23 to 26, wherein, in the undeformed state, the peripheral part (8) lies substantially in a plane and wherein the central part (5) is bent from the plane.

28. Sealing means according to one of claims 23 to 27, wherein the sealing means is part of a chain of successive sealing means.
